# EUROPEAN PATENT SPECIFICATION

(11) **EP 4 235 050 B1**
(45) Date of publication and mention of the grant of the patent: **17.12.2025**
(21) Application number: 23157658.8
(22) Date of filing: 20.02.2023
(51) Int. Cl.: F24F 13/02, F16L 9/00

(54) **VENTILATION SYSTEM**
ROHRLUFTSYSTEM
SYSTEM DE VENTILATION

(30) Priority: 23.02.2022 PL 44044222
(43) Date of publication of application: 30.08.2023
(73) Proprietor: Kazimierski, Wojciech, 02-496 Warszawa (PL)
(72) Inventor: Kazimierski, Wojciech, 02-496 Warszawa (PL)
(74) Representative: Pawlowska-Bajerska, Justyna

(56) References cited:
- EP-A1- 2 042 796
- DE-A1- 102016 109 168
- DE-U- 7 029 076
- US-A- 3 512 805
- US-A1- 2021 302 058
- US-B1- 7 699 078
- US-B1- 8 667 995

## Description

The invention refers to is a structure of a pre-insulated ventilation channel - a ventilation duct with a round cross-section, filled with an insulating layer - insulation having properly selected properties and parameters.

Ventilation ducts that comprise a fibre material are known. A segmental flexible ventilation duct is known from patent description YPL61111, which is used to supply clean air to workplaces in confined spaces in, for example, ship cargo holds, in ship engine rooms 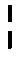 . The essence of the solution is a structure of a segmental flexible ventilation duct, preferably made of PVC-coated synthetic fabric with non-flammable and anti-electrostatic additives, wherein the duct has a cylindrical form with stiffening-fixing rings sewn overlapping on the outer surface, with catching lugs formed on the upper part and stiffening rings which are arranged alternately with respect to each other along the entire length of the duct. Stiffening-fixing rings and stiffening rings are in the form of a wire with welded ends. The segmental structure of the duct is aimed at achieving appropriate flexibility. The use of fabric guarantees low weight of the entire installation. Stiffness is achieved through special wear surfaces. However, the disadvantages of the solution are: lower tightness and strength; higher air drag; the need for more duct fixings and stiffeners; and the inability to be used outside the building.
From specification EP 2 307 814, a ventilation duct is known which comprises a fibrous material and at least one fluid-impermeable surface material, and has an upright position and a polygonal cross-section. The ventilation duct can be wound in its storage position and self-supporting in its upright position due to the alternating soft and stiff transverse portions and to the fact that the alternating soft and stiff transverse portions of the walls and longitudinal bend lines are embossed in the material of the channel walls. Due to the relatively small cross-section, the ventilation duct can be fixed by measures spaced quite far apart from each other. The solution is unable to meet the requirements for large cross-sections and the requirements for high pressure resistance.

From patent publication EP 2758722, a duct is also known which has a hexagonal cross-section, comprises a number of wall sections made at least partially of a fibre material and a binder that together define a closed longitudinal flow space, and the interconnecting wall sections are connected via an intermediate element in the form of at least one longitudinal bend line or weld. Longitudinal stiffeners are arranged in the fibre material and the binder of the duct, and there are longitudinal, teardrop-shaped bulges on the outside of the duct that contain the fibre material and the binder. The disadvantage of the solution, however, is the complexity of the construction, limitation to ventilation ducts with a large cross-section, inability to meet the requirements for high pressure resistance.

From Polish patent application P.403612, a method for manufacturing a ventilation duct for use in single-family buildings, especially in small installations for transporting air in ventilation, air-conditioning and hot air distribution systems, are known. The method for manufacturing a ventilation duct consists in cutting an insulating layer into predetermined form pieces, then grooves are grooved longitudinally in the form pieces thus formed. An adhesive layer is then introduced into these grooves, after which the adhesive thinner is evaporated and a channel core is inserted into the thus prepared form piece of the insulating layer. The channel core with the applied insulating layer is pressed in order to secure the edges and is covered with a protective coating, and the whole is then pressed. The ventilation duct is therefore constructed from a channel core having a square cross-section or a oval cross-section (the one having a squared cross-section is disclosed) made of non-combustible material, wherein the outer surface of the channel core is covered with an insulating layer of foamed polyurethane. In turn, the outer surface of the insulating layer is covered with a protective coating. The thickness of the core is up to 0.4 to 0.6 mm and the thickness of the insulating layer is between 5 and 15 mm. The invention does not allow high pressure to be withstood, besides prefabrication is not possible; the ducts cannot be maintained and cleaned inside; there is a low thermal insulating power due to the structure achieved and the thickness of the insulating layer.

DE-A-102016109168 discloses a ventilation system of ventilation ducts having a round cross section with an inner casing and an outer casing, and an polyurethane thermal insulation layer between the inner and outer casings. The document also discloses a joining clamp between two adjacent ventilation ducts.

The aim of the invention was to provide such ventilation ducts having a provided according to the invention oval shape in a cross-section - ducts with a round cross-section - in order to ensure: the expected tightness, strength, high insulating power, which was achieved through the use of an proper structure/construction - an insulating barrier between the layers of the duct - jackets - casing, which additionally ensures lack of air permeability and stiffness of the duct; resistance to atmospheric conditions - anti-corrosiveness - possibility to be used outdoors. The aim was to achieve a round duct structure that simplifies assembly. It was also important to achieve a high resistance to high pressure, which was achieved through the use of a given layer structure, selection of dimensions, materials that build the layers - jackets - casing, structure of the insulating construction, additionally the use of steel sheet, especially galvanised steel, and a layer of foam forming an insulating layer that insulates moisture. Reduced air drag and ease of maintenance and cleaning of the ducts inside has been achieved by eliminating internal duct stiffeners - and this has been achieved through the structure of the layers - jackets, their joints between the ducts, and the insulating layer. The aim was to obtain the possibility of prefabrication.

The subject-matter of the invention is the structure of a pre-insulated ventilation duct, made in its basic structure by two separate layers which are located parallel to each other in the form jackets - known as casings of duct and which constitute an outer pipe and an inner pipe, i.e. an outer jacket, outer casing of the duct, having a circular cross-section - a round structure in cross-section - the outer pipe; and an inner jacket, inner casing, running concentrically in the outer jacket - constituting the inner pipe. A space filled with polyurethane foam is created between the outer jacket and the inner jacket, thus forming an insulating partition - barrier in the meaning as compartment, section or area that divides the layers of the duct. The space created by the inner jacket - inner piper in the outer pipe remains empty, thus forming an inner/inside channel, which constitutes the lumen of the ventilation duct. Thus, the interior formed into - inside and within the boundaries - line of the inner jacket is not filled with any insulating material.
Pre-insulated ventilation ducts, i.e. those containing an insulating partition, having a circular cross-section - round shape in cross-section- may be straight - line ducts - straight pipes, as well as other ventilation fittings also known as connector that together with straight ducts form a ventilation network - system. The fittings are e.g. segmental elbows connecting straight sections, T-pieces - tee, cross-pieces and others used as standard in the structures of ventilation ducts that build a ventilation network, depending on the layout of ventilation network ducts. What is important in the invention is that in each type of ventilation duct having a round shape in cross-section, an insulating partition with developed, determined characteristics and two jackets of a developed structure, described below in the sub-tables and further in the tables, are formed. These types of ducts/fitting are components of the ventilation network.
According to the invention, it has been determined that the polyurethane foam insulation - the insulating partition, insulating compartment, for each type of duct having a round cross-section has a thickness of 10 to 50 mm.

The dimension of the outer jacket - other casing has also been determined - its diameter D in cross-section through the ventilation duct, counted from the layers - walls of the outer jacket including an insulating layer, is from 100 to 500 mm; and adequately the diameter of the inner jacket d counted from its inner layer - walls to its opposite inner layer, is from 100 to 480 mm.

Depending on the type of ventilation duct - be it straight duct or fitting - the diameter value of the two jackets may vary along - within the length of the duct, which is technically depends on the structure of the ventilation network, however, always on each section within the length of particular duct, these diameters are within the limits according to the invention. In this case, the two values shown on figures are given in the examples.

The constructions of each duct - separately straight duct or fitting known as connector - according to the invention also simplify the joining of the components into a ventilation network.

The inner jackets of the two network components - straight ducts and/or fittings joined into a network - are fastened to each other detachably by means of a joining clamp known also as a band coupling - joining clamp, otherwise known as a joining fitting having a circular - round shape in longitudinal section empty inside - in the centre - there is hollow, in which a widening in the form of a ring on the outer surface of the band coupling, preferably in the centre, is formed, whereby the size, i.e. the diameter, of the band coupling - joining fitting where no ring is formed is technically adjusted to enable the band coupling to be inserted from one side up to the location of the ring into the lumen of the inner jacket of one of the network components to be joined. The ring formed on the surface of the band coupling, when one part thereof is applied - located - put - into the lumen of the inner jacket of one network component to be joined, is blocked on the formed insulating partition between the inner and outer jackets of each joined component of the ventilation network - as the size of the ring is larger than the rest elements of the band coupling. The other side of the joining band is similarly positioned in the other network component to be joined. The ring thus formed on the band coupling is between the network components to be joined - at the height of the insulating partition. Each side of the band coupling is positioned into a portion of the inner jacket lumen. The band coupling is preferably a nipple. The band coupling has two sides divided by the ring formed on the band coupling - one side enters - is positioned in the opening of the inner jacket - in its fragment - of one network component and the other side of the band coupling is positioned in the opening of the inner jacket of the other network component - in its part. The ring is between these parts to be joined and its size is larger than the rest of the band coupling, so it is retained at the height of the insulating partition layer. The joining fitting - the band coupling therefore enters with its ends up to the point of the ring into the inner channel of the network ducts/fittings to be joined.

Preferably, the band coupling, in particular the nipple, is fitted with a seal - known as gasket.

Such joining is therefore used to join ducts and/or fittings into a ventilation network.

Preferably, however, if a space is formed between the inner jackets to be joined on their upper surface at the height of the band coupling ring, this space is filled - up to the border of the outer jacket - with polyurethane foam to form an additional outer insulation of polyurethane foam - i.e. an additional compartment - layer of polyurethane foam.

Thus, according to the invention, the space formed between the jackets to be joined of the components - straight ducts and fittings - forming the ventilation network is preferably filled with polyurethane foam.

In addition, the place where the network components are joined, at the height of the outer jackets of the straight ducts and/or fittings to be joined forming the ventilation network - on the outer surface of the outer jackets of the two components to be joined - is reinforced by means of a another clamp - tighten clamp/band coupling here known as a band clamp mounted on the outer part of each component to be joined, i.e. on the outer jackets of the two network components. Preferably, the location of the band clamp is on the outer jackets exactly at the point where the two network components are joined - in the same location but above the band coupling - on the outer surface of the outer jackets of the two network components to be joined at the height of the band coupling. Preferably, closed-cell foam is used as the polyurethane foam that builds up the insulating partition. It is important that the thickness of the material of which each jacket is made, i.e. - the outer jacket and the inner jacket of the straight duct (outer pipe and inner pipe), i.e. the thickness of these jackets ranges from 0.45 mm to 0.5 mm. Preferably, this thickness increases depending on the diameter of the inner jacket - d or the outer jacket - D, i.e. either or both of them, preferably in such a way that when the diameter d of the duct is <=315, the thickness of the jacket is preferably 0.45 mm, and when above 315 mm, it is preferably 0.5 mm. Preferably the thickness of each of the jackets is the same but it is not necessary. In turn, the thickness of the material of which the outer and inner jackets of the fittings are made (all components that are not a straight duct), i.e. the thickness of the jackets of the fittings is between 0.45 mm and 0.5 mm. Preferably, this thickness of fittings is independent of the dimension of their diameters.

The outer and inner jackets are made of galvanised steel sheet (painted or not) or acid-resistant steel sheet, or stainless steel sheet. Galvanised steel sheet is understood to be a galvanised sheet produced by subjecting the steel to a galvanising process, i.e. the steel is coated with a layer of zinc, which forms a very tight coating covering the entire surface.

Preferably, the inner jacket and the outer jacket are made of galvanised steel sheet, e.g. DX51D, which is the thickness of galvanised metal sheet with a zinc coating, e.g. Z275, which is the thickness of galvanised metal sheet. Galvanised metal sheets are produced by subjecting the steel to a galvanising process. The steel is coated with a layer of zinc by a known method. It is a very tight coating, covering the entire surface. Steel sheets that have been galvanised additionally acquire anticorrosive properties, moisture resistance, high temperature resistance.

Preferably, the length L of a straight ventilation duct - straight pipe is <=3000 mm, while the length L of a fitting for joining ducts to form a ventilation network of channels is < 1250 mm, preferably 220 ÷ 1250 mm and 220 ÷ 500 mm, depending on the type of fitting. Preferably, the length L of a T-piece also known as tee having a round cross-section, for joining ducts to form a ventilation network of channels, is 220 ÷ 1250 mm and 220 ÷ 500 mm.

Preferably, the length L of a symmetrical segmental reducer having a circular cross-section, for joining the ducts to form a ventilation network of channels, is 220 ÷ 500 mm, in turn, for an asymmetrical segmental reducer, L≤ 220 mm, and for a cross-piece, L is 220 ÷ 1250 mm.

Lowercase d1, d2, d3 and uppercase D1, D2 D3 relate to the dimensions of ducts with a variable diameter dimension - narrowing and widening along the length - fittings - however, the range of D as well as d is to be as specified above, the diameter of the outer jacket is 100 to 1250 mm, including the specified limit values, preferably 100 to 500 mm, and the diameter of the inner jacket d is 100 to 1050 mm, including the specified limit values, preferably 100 to 480 nm. The thickness of the insulating layer of polyurethane foam is maintained along the entire length of the duct.

The limit values are shown below for the diameters D, d, L for individual ventilation ducts, including straight ducts and fittings for joining ducts and constructing a ventilation network and these are size limit values that have been additionally tested for effects, i.e. such values produce the additional beneficial effects described in the example according to the invention and have been granted the National Technical Assessment. These values represent a preferable characteristic according to the invention. Therefore, preferably, a straight duct having a circular cross-section has a diameter Ød of 100 ÷ 480 mm and a diameter ØD of 120 ÷ 500 mm, and the length L of the duct is ≤ 3000 mm. It turned out that these ranges in this particular invention additionally meet the dimensional tolerances according to EN 1506:2007. Preferably, a segmental elbow having a circular cross-section has a duct diameter Ød of 100 ÷ 480 mm and an outer jacket diameter ØD of 120 ÷ 500 mm, respectively, which ensures that the dimensional tolerance according to PN-EN 1506:2007 is additionally met in this particular invention. A symmetrical T-piece for a duct having a circular cross-section, in turn, has an inner jacket diameter Ød1, Ød2 of 100-480 mm and an outer jacket diameter ØD1, ØD2 of 120-500 mm, respectively, while a length dimension L is 220-600 mm + a thickness of the insulating layer of 10 ÷ 50 mm. It turned out that these ranges additionally meet the dimensional tolerances according to EN 1506:2007 in this particular invention and guarantee the expected operational properties. A symmetrical segmental reducer for a duct having a circular cross-section preferably has the following dimensions: an outer jacket diameter Ød1, Ød2 in mm and an inner jacket diameter ØD1, ØD2 in mm are 100 ÷ 480 and 120 ÷ 500 mm, respectively, and a length dimension L is 220 ÷ 500 mm. It turned out that these ranges in this particular invention additionally meet the dimensional tolerances according to EN 1506:2007.

An asymmetrical segmental reducer for a duct having a circular cross-section preferably has the following dimensions: an inner jacket diameter Ød1, Ød2 in mm and an outer jacket diameter ØD1, ØD2 in mm of
100 ÷ 480 and 120 ÷ 500 mm, and a length L of 220 ÷ 500. It turned out that these ranges in this particular invention additionally meet the dimensional tolerances according to EN 1506:2007.

A cross-piece for a duct having a circular cross-section, in turn, has a duct diameter Ød1, Ød2, Ød3 and a diameter ØD1, ØD2, ØD and a length L in mm: 100 ÷ 480 and 120 ÷ 500, and 220 ÷ 600 mm, respectively. It turned out that these ranges in this particular invention additionally meet the dimensional tolerances according to EN 1506:2007.

A mesh vent cap for a duct having a circular cross-section, preferably, has the following dimensions:
a duct diameter Ød1 in mm and a diameter ØD1 in mm of 100 ÷ 480 and 120 ÷ 500. It turned out that these ranges in this particular invention additionally meet the dimensional tolerances according to EN 1506:2007.

The advantage of the invention is that the duct structure and the insulating layer formed allow a thermal transmission coefficient that is twice as good as in the insulation wool usually used in ventilation to be achieved, which has a beneficial effect on the elimination of heat loss in the installation and has a beneficial effect on the weight and size of the installation. High pressure resistance, expected tightness, strength and high insulation were achieved. Furthermore, it effectively seals and rigidifies the channel by improving its resistance to high pressure and the associated deformation, and eliminates the formation of "thermal bridges" found in other insulating materials. The selected thickness of the insulating layer guarantees optimum rigidity and relatively low weight. The structure allows for a duct that is fire-retardant and non-flammable, as well as corrosion-resistant and non-dripping. Not having to carry out assembly using, among other things, assembly pins, the welding of which weakens the surface of the jackets, and nails that are welded to the surface of the ventilation channel has a beneficial effect on the protection of the coating of the jackets, especially when using zinc metal sheets.

Unlike other known ducts with an insulating material, the invention guarantees high resistance to water vapour diffusion, which prevents condensation and moisture ingress - the main cause of corrosion on the surface of pipes and channels. The ducts according to the invention can be used outdoors due to the fact that they are extremely tight and rainwater cannot penetrate the insulating layer.

Under the influence of limit values of static pressure according to EN 12237:2005 (-750 to 2000 Pa), there is no permanent deformation or sudden change in tightness.

The structure and formed insulating layer of the duct effectively suppresses the noise emitted by air movement.

The use of the steel sheet structure according to the invention allows a significant reduction in wear and tear of up to 50% by allowing the use of thinner metal sheets due to the foam layer present which sufficiently rigidifies the duct structure. The solution is environmentally beneficial.

Embodiments show the ducts with limit parameters - minimum and maximum, as indicated in the sub-tables and tables.

An overview of limit values d, D, L for various types of ventilation ducts having circular cross-sections is given below. In embodiments, the invention had limit values given in the sub-tables and table.

Straight duct having a circular cross-section

| Inner jacket diameter Ød (single value over entire length), mm | Outer jacket diameter ØD (single value over entire length), mm | Duct length L, mm |
|---|---|---|
| 100 ÷ 480 | 120 ÷ 500 | ≤ 3000 |
| These ranges in this particular invention additionally meet the dimensional tolerances according to EN 1506:2007. | | |

Segmental elbow having a circular cross-section, where α is an elbow angle of 0 - 135

| Inner jacket diameter Ød (single value over entire length), mm | Outer jacket diameter ØD (single value over entire length), mm | α, ° |
|---|---|---|
| 100 ÷ 480 | 120 ÷ 500 | 0 ÷ 135 |
| These ranges in this particular invention additionally meet the dimensional tolerances according to EN 1506:2007. | | |

Symmetrical T-piece - symmetric tee for a duct having a circular cross-section

| Inner jacket diameter Ød1, Ød2, (various values over entire length in the range given), mm | Outer jacket diameter ØD1, ØD2, (various values over entire length in the range given), mm | Spigot dimension, mm | Dimension L, mm |
|---|---|---|---|
| 100 ÷ 480 | 120 ÷ 500 | 70 + thickness of the insulating layer | 220 ÷ 600 |
| These ranges in this particular invention additionally meet the dimensional tolerances according to EN 1506:2007. | | | |

Symmetrical segmental reducer for a duct having a circular cross-section

| Inner jacket diameter Ød1, Ød2, (various values over entire length in the range given), mm | Outer jacket diameter ØD1, ØD2, (various values over entire length in the range given), mm | Dimension L, mm |
|---|---|---|
| 100 ÷ 480 | 120 ÷ 500 | 220 ÷ 500 |
| These ranges in this particular invention additionally meet the dimensional tolerances according to EN 1506:2007. | | |

Asymmetrical segmental reducer for a duct having a circular cross-section, where e is the offset from the lateral plane

| Inner jacket diameter Ød1, Ød2, (various values over entire length in the range given), mm | Outer jacket diameter ØD1, ØD2, (various values over entire length in the range given), mm | Dimension L, mm | Dimension e, mm |
|---|---|---|---|
| 100 ÷ 480 | 120 ÷ 500 | 220 ÷ 500 | ≤ 220 |
| These ranges in this particular invention additionally meet the dimensional tolerances according to EN 1506:2007. | | | |

Cross-piece for a duct having a circular cross-section

| Inner jacket diameter Ød1, Ød2, Ød3, (various values over entire length in the range given), mm | Outer jacket diameter ØD1, ØD2, ØD3, (various values over entire length in the range given), mm | Spigot dimension, mm | Dimension L, mm |
|---|---|---|---|
| 100 ÷ 480 | 120 ÷ 500 | 70 + thickness of the insulating layer | 220 ÷ 600 |
| These ranges in this particular invention additionally meet the dimensional tolerances according to EN 1506:2007. | | | |

Mesh vent cap - grills for a duct having a circular cross-section

| Inner jacket diameter Ød (single value over entire length), mm | Outer jacket diameter ØD (single value over entire length), mm | Spigot dimension, mm |
|---|---|---|
| 100 ÷ 480 | 120 ÷ 500 | 60 |
| These ranges in this particular invention additionally meet the dimensional tolerances according to EN 1506:2007. | | |

The object of the invention is shown in the drawing and in embodiments. The drawing shows:

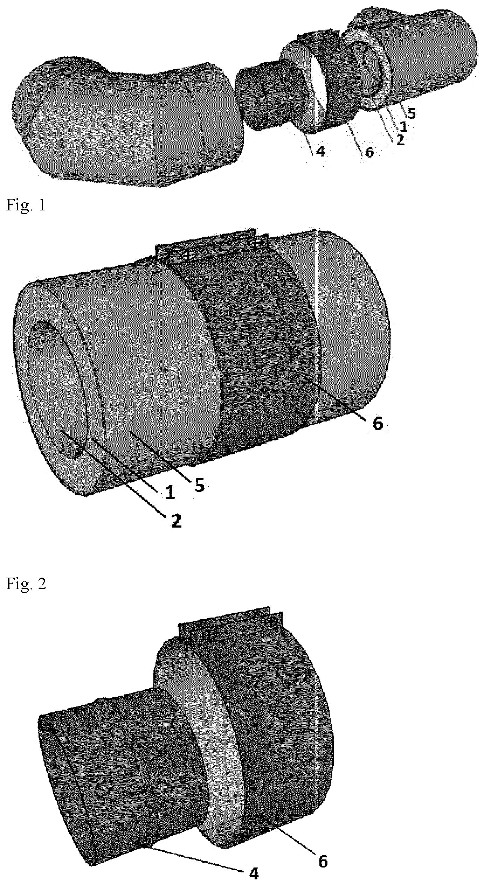

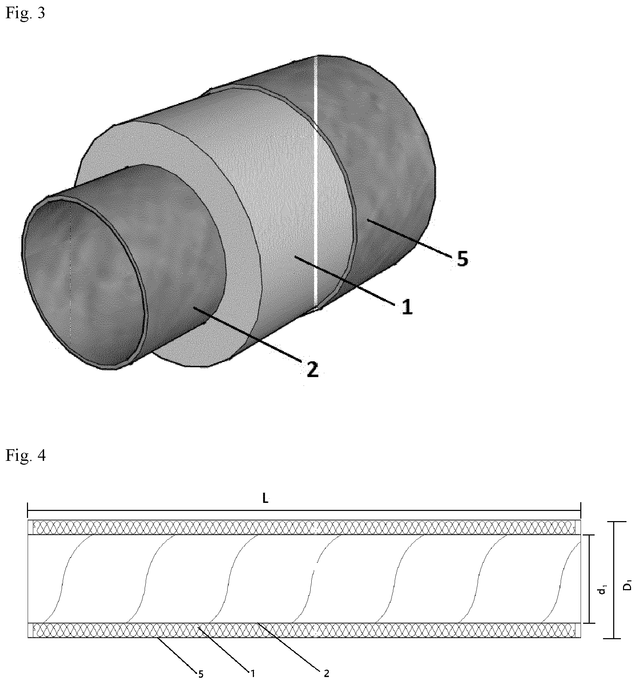

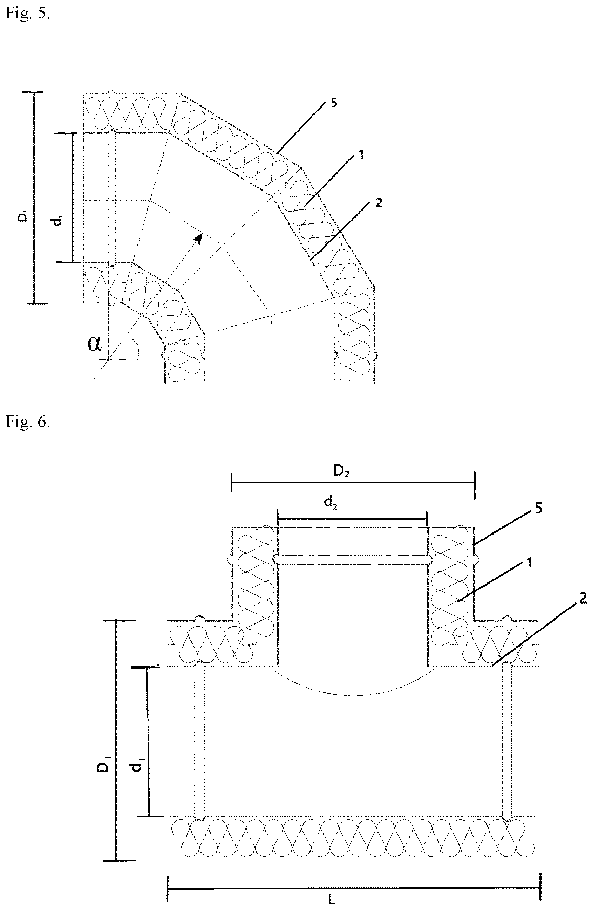

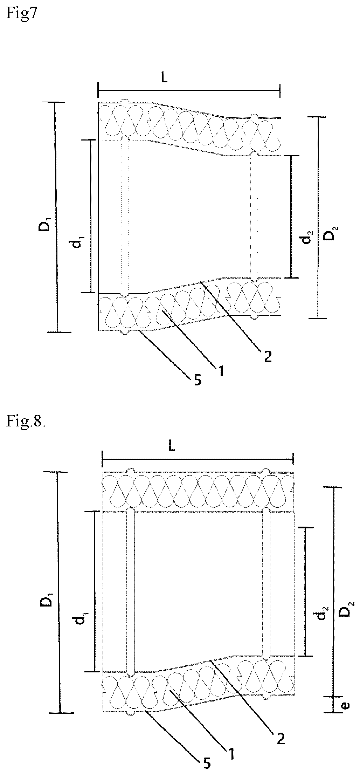

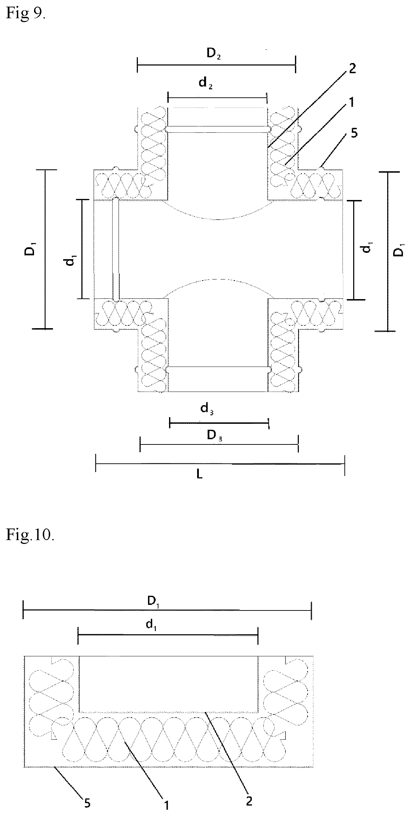

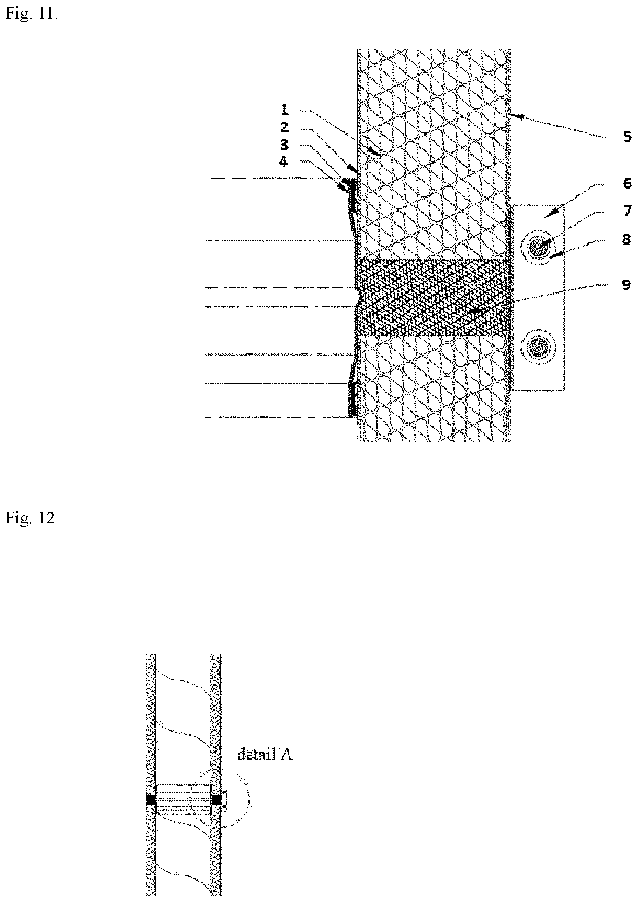

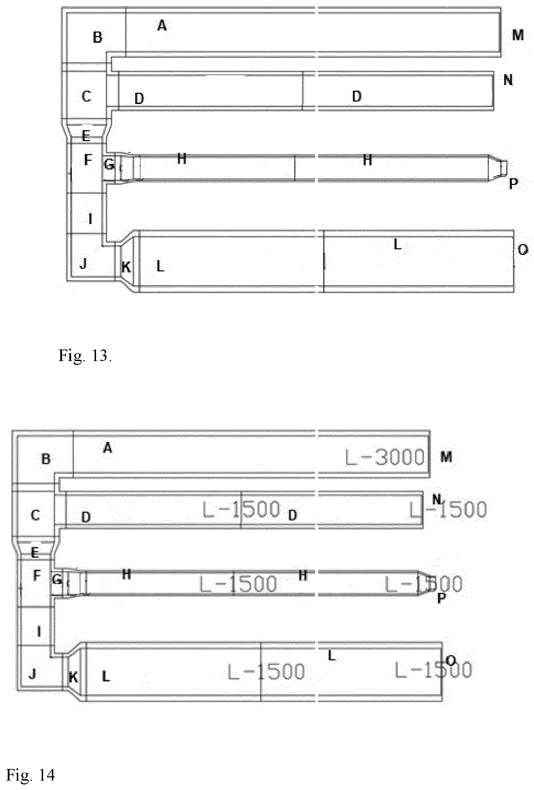

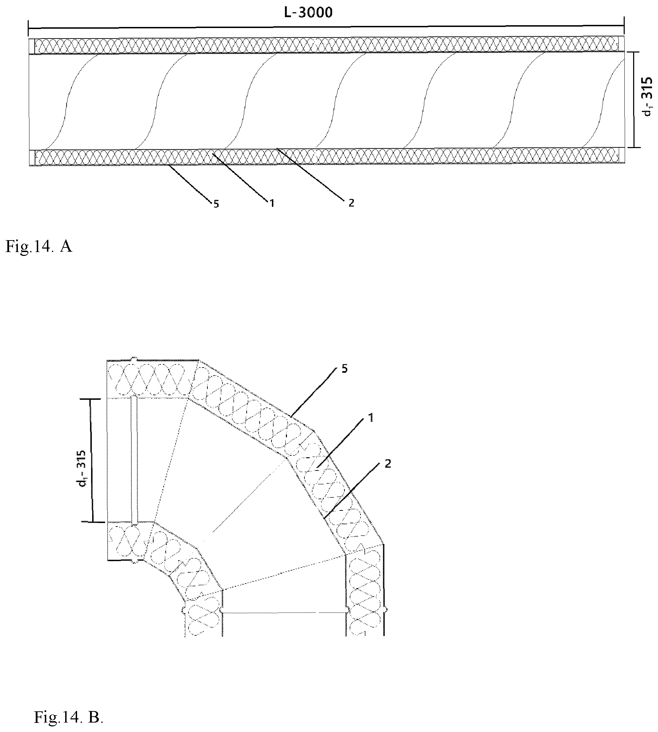

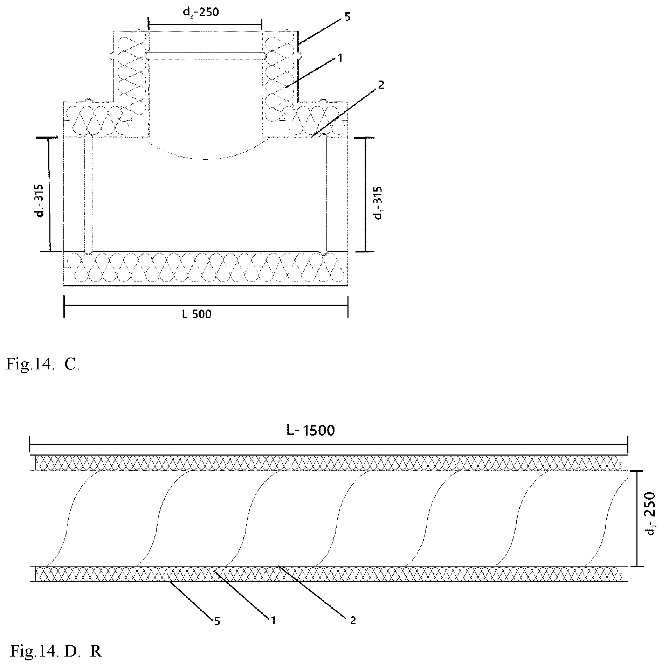

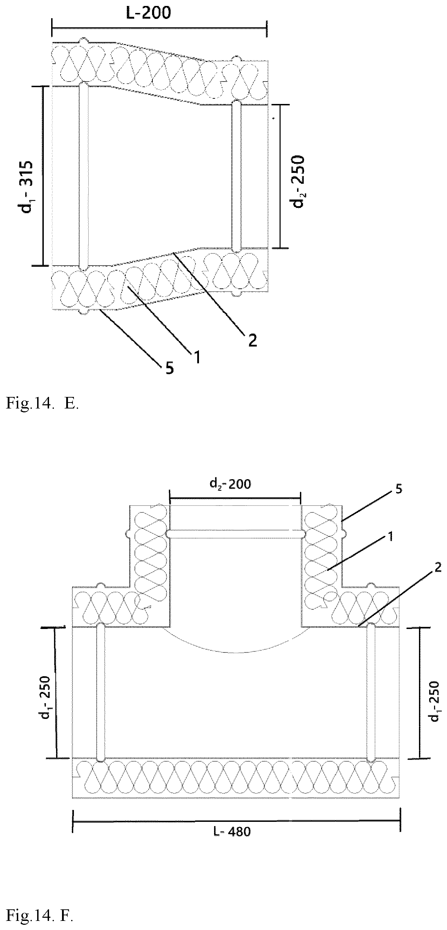

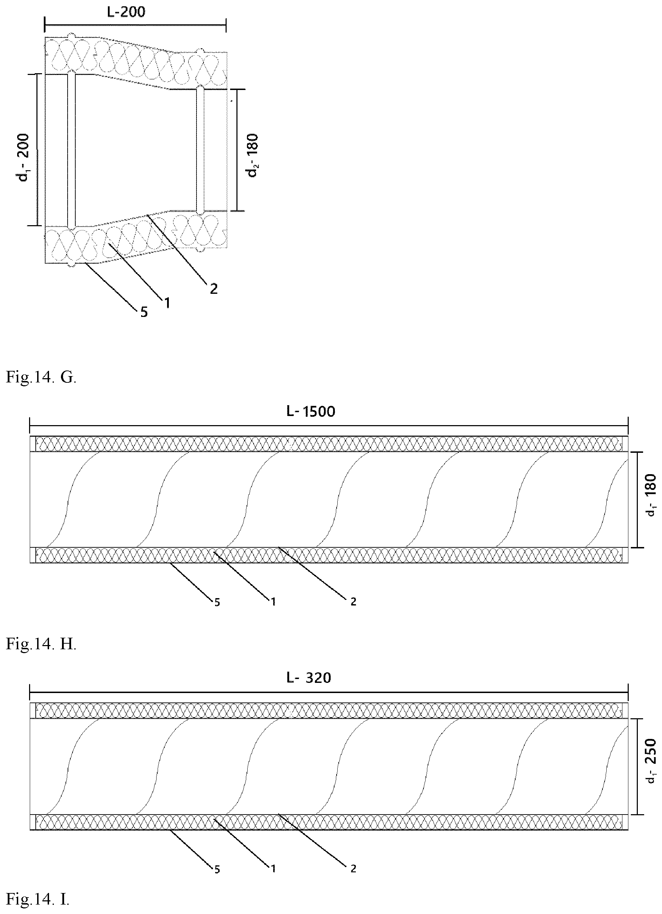

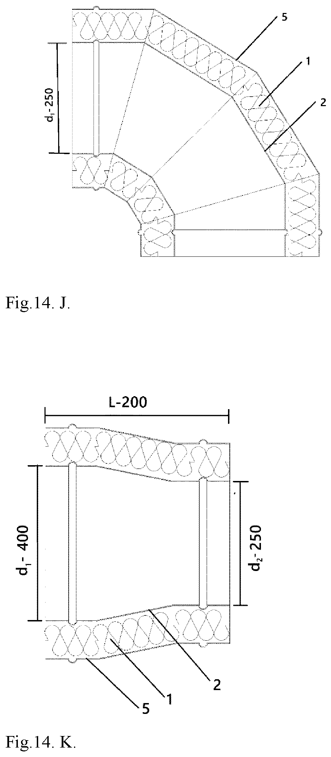

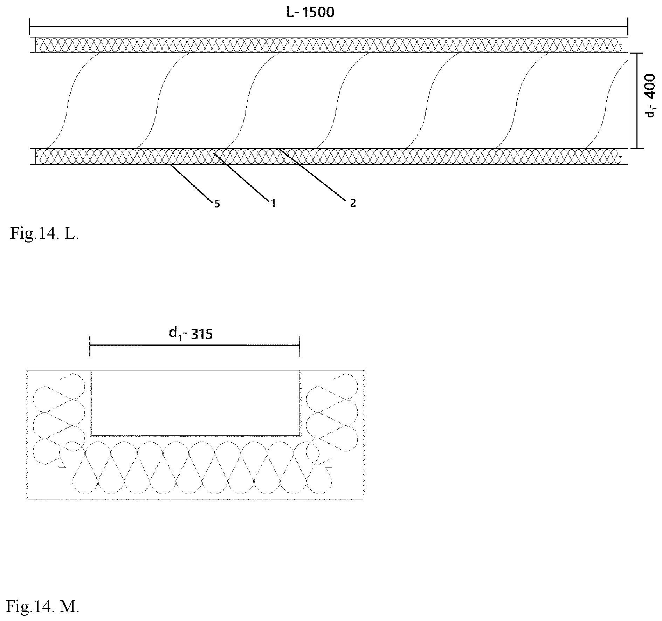

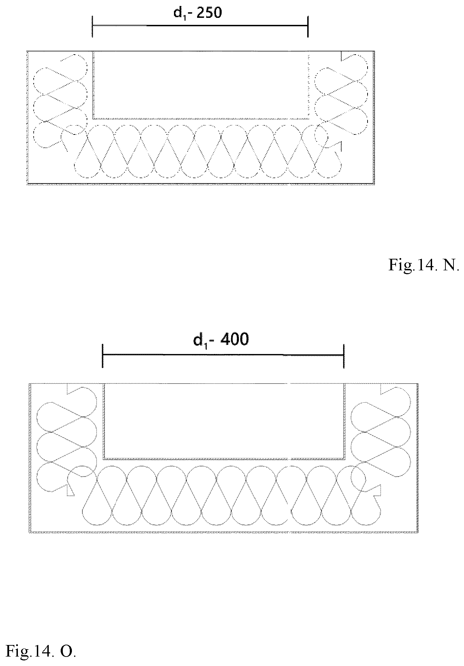

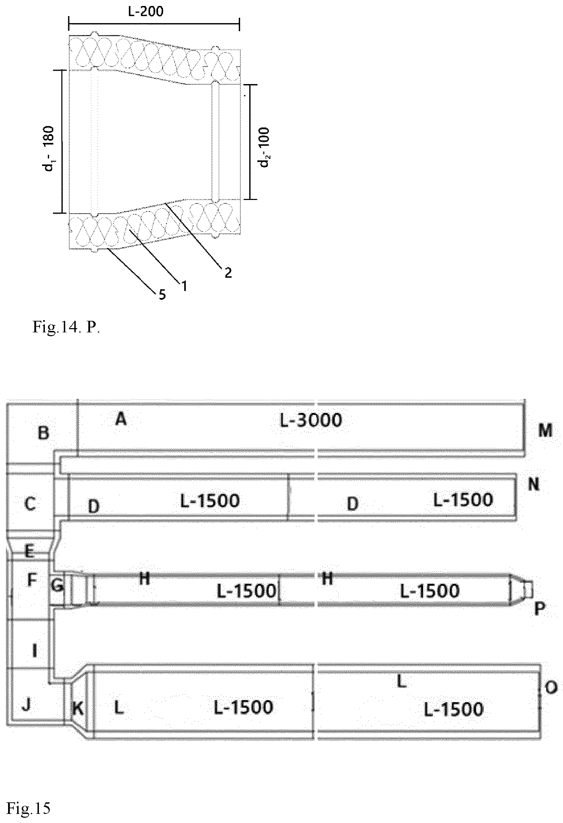

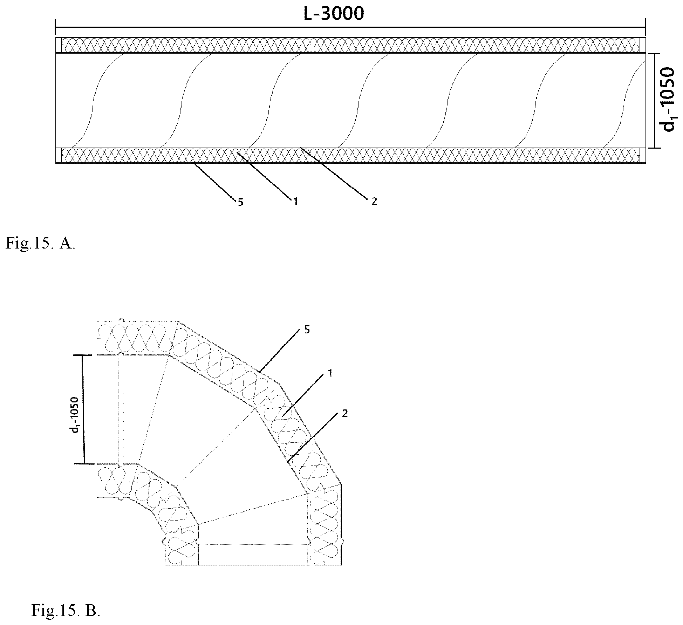

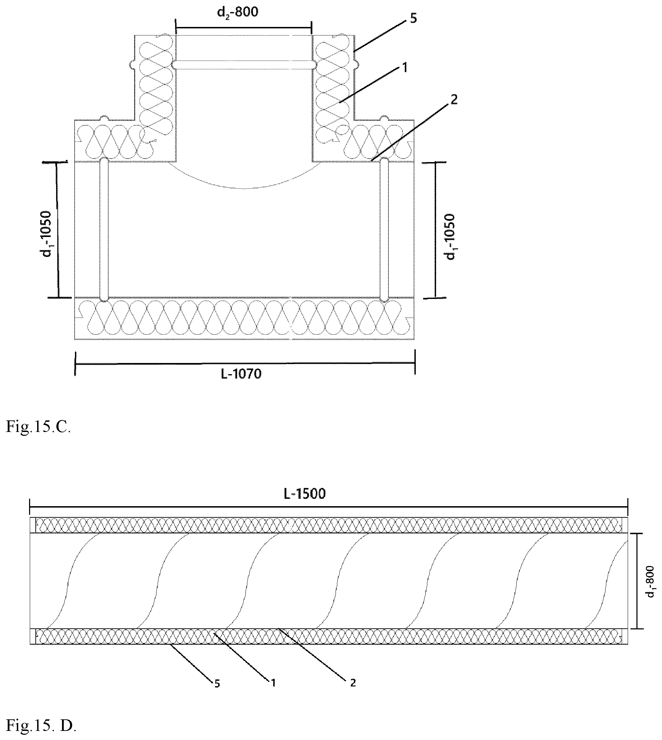

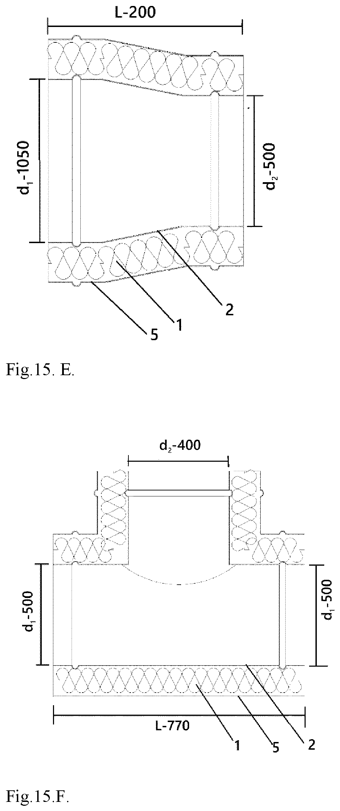

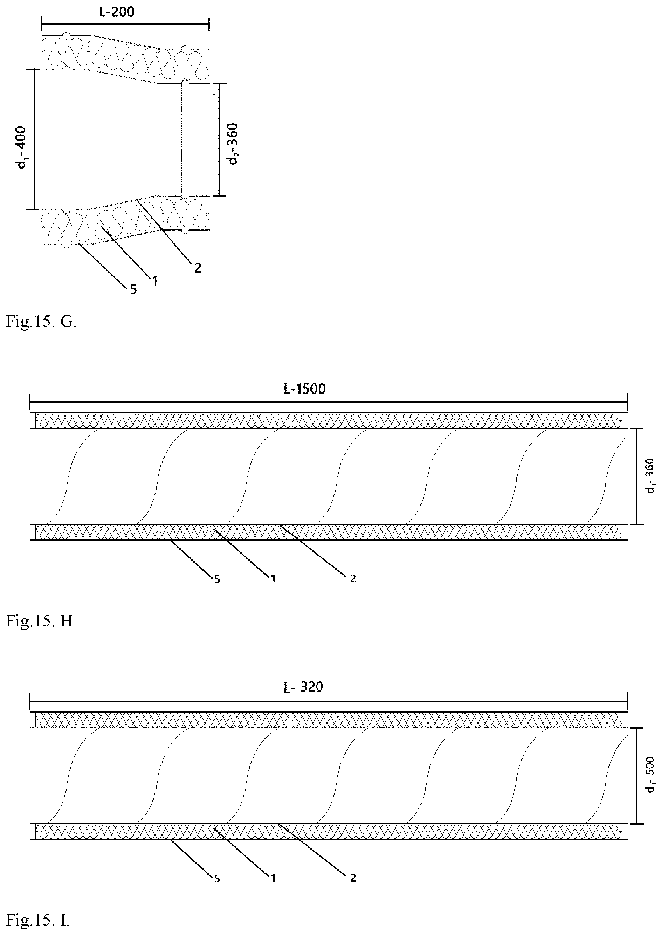

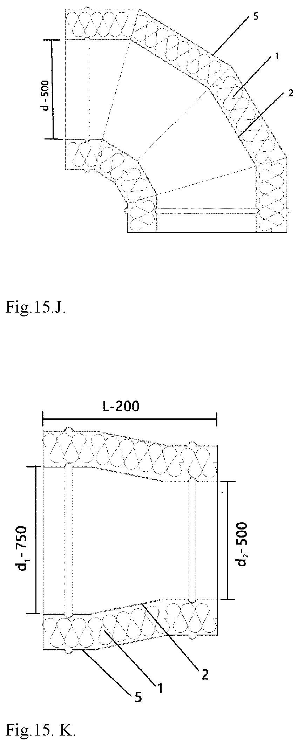

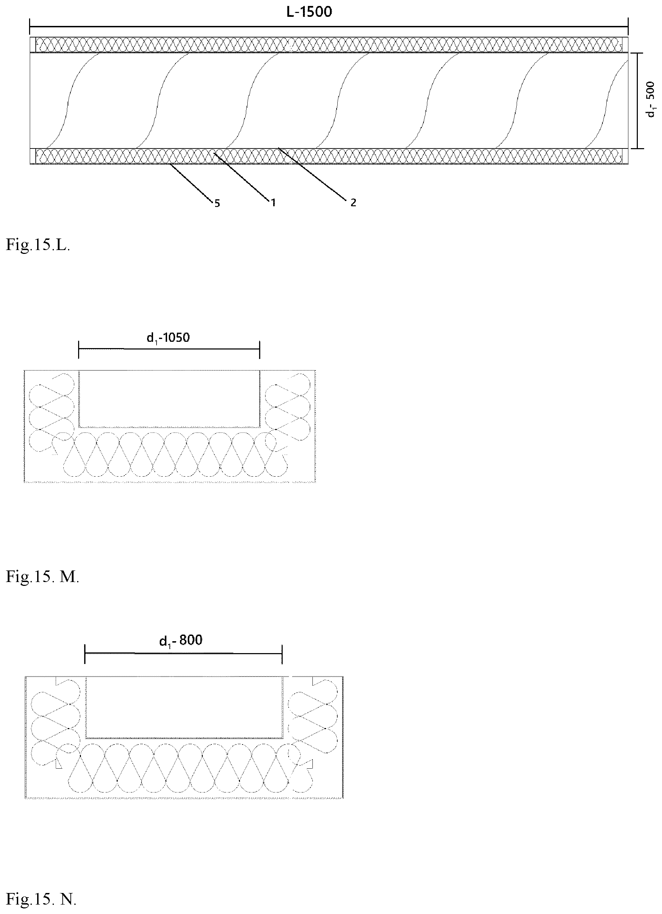

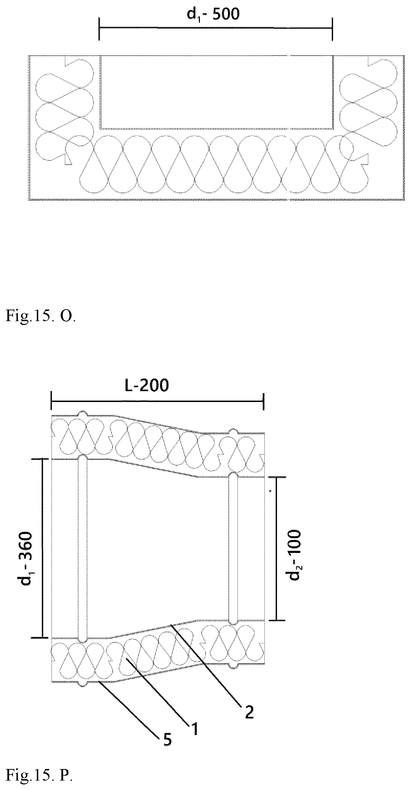

Fig. 1 - an axonometric view of a ventilation channel structure with its parts taken apart and with visible components to be assembled; Fig. 2 - an axonometric view of the assembled ventilation channel structure with a visible band clamp; Fig. 3 - a nipple with a band clamp; Fig. 4 - a duct cross-section showing an inner duct, a foam-filled space and an outer duct; Fig. 5-11 - a longitudinal section of individual components of a ventilation system - so-called fittings for joining ventilation components that form a ventilation network, with dimension designations (Fig. 5. A straight duct having a circular cross-section, Fig. 6. A segmental elbow having a circular cross-section, Fig. 7. A symmetrical T-piece- tee - for a duct having a circular cross-section, Fig.8. A symmetrical segmental reducer for a duct having a circular cross-section, Fig. 9. An asymmetrical segmental reducer for a duct having a circular cross-section, Fig. 10. A cross-piece for a duct having a circular cross-section, Fig. 11. A mesh vent cap - grill for a duct having a circular cross-section); Fig. 12 a longitudinal/vertical section through a straight insulated duct according to the invention, where a method of making connections of pre-insulated ventilation ducts having a circular cross-section is shown in detail, Fig. 13 an example of a ventilation network with designations of individual components - straight ducts and fittings - connectors, Fig. 14 a longitudinal view of Example 2 of the ventilation network with designations of individual components - straight ducts and fittings as specified in Table 1 - together with dimensions of inner jacket diameters d,d1,d2,d3 of these components, Fig.14.A - Fig.14.P longitudinal views of individual components included in the ventilation network from Example 2 - the lettered figure names indicated in the table denote the specified network components, i.e. Fig. 14. A - a longitudinal view STRAIGHT DUCT d1= 315, Fig. 14. B - a longitudinal view ELBOW 90 deg. d1 315 etc., Fig. 15 a longitudinal view of Example 3 of the ventilation network with designations of individual components - straight ducts and fittings as specified in Table 2, lettered figure names indicated in the table - together with dimensions of inner jacket diameters d of these components, Fig.15.A - Fig.15P longitudinal views of individual components, i.e. fittings, included in the ventilation network of Example 3 with an explanation in the first column of the table as to which component is shown.

The invention is presented in tabular overviews - sub-tables indicated above and tables mentioned in the examples. The example relates to minimum and maximum limit values.

### List of designations:

1- polyurethane foam insulation - an insulating partition, otherwise known as an insulating layer of polyurethane foam - insulating compartment, section
2- Inner jacket, otherwise known as an inner pipe, inner casing
3- Gasket - seal for a band coupling - joining clamp, in the example - on a nipple (EPDM)
4- Band coupling - joining clamp for joining inner jackets of ventilation network ducts - straight ducts and/or fittings, otherwise known as a threaded / screw joining fitting - in the example, a nipple
5- Outer jacket, otherwise known as an outer pipe, casing
6- Outer band clamp - tighten clamp
7- Bolt, screw
8- Rivet nut
9- Additional outer insulation made of polyurethane foam - i.e. an additional layer of polyurethane foam at the height of the band coupling ring, joining clamp 4 between network components being joined.

d - inner jacket diameter
D - outer jacket diameter
d1 - inner jacket diameter in the next branch in an asymmetrical fitting
d2 - inner jacket diameter in the next branch in an asymmetrical fitting
D1 - outer jacket diameter in the next branch in an asymmetrical fitting
D2 - outer jacket diameter in the next branch in an asymmetrical fitting

Figure names according to designations from the tables - where it is explained what is shown in a given figure by letter designation:
- A: Straight duct
- B: Elbow
- C: T-piece, tee
- D: Straight duct
- E: Reducer
- F: T-piece, tee
- G: Reducer
- H: Second straight duct
- I: Pipe
- J: Elbow
- K: Reducer
- L: Third straight duct
- M: Cover, lid
- N: Cover, lid
- O: Cover, lid
- P: Reducer

### Example 1

### Structure of a ventilation duct and a ventilation network

As shown in Fig. 1-5, a straight ventilation duct with a circular cross-section of length L=3000 mm consists essentially of an outer jacket of larger diameter 5 and an inner jacket 2 of smaller diameter than the previous one, constituting an outer pipe 5, in the centre of which there is an inner pipe 2 concentrically located, with a channel formed in the centre. Dimensions are given above in the sub-tables and tables - a duct with limit values - minimum and maximum - was produced.

The space between the channels is filled with closed-cell polyurethane foam having in this example a solid and regular structure, forming an insulating partition 1 with a thickness in this example of 10 mm and a method of filling the space between the channels is described below. The system used in the example is 9758-X, a rigid foam with a density of 40 to 50 kg/m3 after application. Jackets 5 and 2 of the duct are made of 0.5 mm thick spiral-wound galvanised steel sheet. Each component of the network was produced in a similar way.

The inner jackets 2 of individual network components are joined by a band coupling otherwise known as a fitting as described above - in this example the joining is by a nipple 4 with a gasket 3. The idea is to join two separate components of the system together, e.g. a pipe with a T-piece or other fitting with a straight duct. A ring, i.e. a thickening - of protrusions on the outer surface of the band coupling is made in its centre - the same on the nipple 4 in the example.

The band coupling 4 is circular in longitudinal section, hollow in the centre, and in the centre there is a ring-shaped widening on the outer surface of the band coupling, wherein the size, i.e. the diameter of the band coupling - the joining fitting, where there is no ring formed, is adapted to allow the insertion of the band coupling from one side up to the location of the ring into the lumen of the inner jacket of one network component t b joined - and this size is 9 mm ±2.... with a height of 6±2 mm. Thereby, the ring with a height of 6mm +/-2mm, formed on the surface of the band coupling 4, when one part thereof is applied into the lumen of the inner jacket of one network component to be joined, is blocked on the formed insulating partition 1 between the inner and outer jackets of each joined component - as the size of the ring is larger than the rest of the band coupling. It is similar for the second component so joined by means of the band coupling 4.

Each part of the band coupling between the ring is therefore inserted into the centre of the holes, i.e. into the lumen of the inner jackets 2 of these components to be joined until a ring is formed and they are thus joined together. In this example, the nipple 4 is a tube-shaped component having external threads at both ends and a hexagonal ring in the shape of a flat nut in its centre. That is, in order to join two components of the network together, e.g. two fittings, one side of the nipple 4 (band coupling, otherwise known as a joining fitting) is positioned into the opening of one component of the network - the lumen of the inner jacket 2 , and onto the other side of the nipple 4 a second fitting/straight duct is inserted in the same way up to the blocking point - the ring of the nipple 4. The ring of the nipple 4, in turn, is blocked by an insulating partition between the jackets of the components to be joined. This will create a minimum gap between the joined fittings at the height of the ring - i.e. the protrusion on the surface of the band coupling - as the ring - protrusion is smaller than the thickness of the insulating partition 1, in this example, aerosol foam can be injected into it and then fills this space, an outer band clamp 3 is then placed on top on the inner jacket and tightened with bolts. The same polyurethane foam is used as for the formation of the insulating partition 1. The joint area is therefore additionally filled with polyurethane foam, which forms an additional external insulation 9 of polyurethane foam as shown in Fig. 12.

The joining of the network components on the outer side - i.e. on the surface of the outer jackets of the network components to be joined - exactly at the height of the joining of the inner jackets of the components to be joined - as described above, is reinforced with a band clamp 6 as shown in Fig. 2 and 3, 12.

The band clamp 6, together with a bolt 7 and a rivet nut 8, is assembled at the joining point of individual components making up the ventilation network on their outer jackets, while the nipple 4 enters inside the inner jackets of the individual components of the system that are joined, as shown in Fig. 1.

The tightness of joints is ensured in this example by the gasket 3 of EPDM rubber. The steel sheet - the strip of which the jackets of the straight duct are made - is connected by the spiral-wound method.

As shown in Fig. 5, the dimension of the outer jacket - its diameter D in the longitudinal section, through the ventilation duct, one over the entire length, measured from the layers of the outer jacket including the insulating layer is, in this example, 500 mm, and the diameter of the inner jacket d, d1,d2 measured from its inner layer to its opposite inner layer, one over the entire length, is 480 mm. d1 and d2 are the diameters used in fittings with several circular branches of different dimensions, e.g. an asymmetrical T-piece has a branch with a diameter of 100 mm, a second branch with a diameter of 125 mm and a third branch with a diameter of 200 mm, each of the diameters of the inner jacket is referred to as a lowercase "d" and must be distinguished as d, d1 and d2.

The same applies to the diameters of the outer jackets, i.e. the uppercase "D". Dimensions of other ducts - joining fittings are given above in the sub-tables and tables - ducts with limit values - minimum and maximum - were produced.

### Method of constructing a ventilation network

Fig. 6-11 show foam-insulated straight ducts, and fittings - segmental elbows, T-pieces, cross-pieces and other ventilation fittings making up the ventilation network shown, for example, in Fig. 13 further described below. As shown in Fig. 12, they are joined together by means of the same nipple 4 that joins the jackets of each duct separately, provided with a rubber seal 3 and a band clamp 6, thus forming a ventilation network. An example of a ventilation network is shown in Fig. 13 and described in the following examples. In Fig. 3, as A-P, other network components shown in Fig. 6-11 are shown.

A method of filling the space between the outer jacket and the inner jacket with polyurethane foam, i.e. forming an insulating barrier.

Liquid polyurethane foam is inserted between two ducts positioned in a mould using the "flooding" method, and after a short while a complete insulating layer is obtained.

### Example 2

The example is a ventilation line of pre-insulated straight ducts described above and below and fittings described above and below having a circular cross-section of 14.2 m2 and a connection length of 15.54 m made of a strip of galvanised steel sheet DX51D Z275, 137 mm wide and 0,45 mm thick for the straight spiral-wound ducts and of galvanised steel sheet DX51D Z275, 0.5 mm thick for the fittings made by means of lap seams and welds - these are methods of joining pieces of cut metal sheet together to form fittings. Sometimes both are used for one component and other times only one. Lap seam is a special bending and clamping done on a machine designed for this purpose. Weld is a joining of a metal sheet by heating it in order to melt it.

For ducts with an inner jacket diameter d of more than 300 mm and an outer jacket diameter D of more than 300 mm, the strip is embossed in order to improve rigidity. The pre-insulated straight duct consists of an inner jacket 2, an insulating partition 1 - an insulating layer of closed-cell polyurethane foam and an outer jacket 5 with a correspondingly larger diameter - D given in Table 1 below. The pre-insulated fitting and straight duct as described in Example 1 includes an inner jacket 2, an insulating partition 1 - a closed-cell insulating layer of polyurethane foam and an outer jacket 5 with a correspondingly larger diameter i.e. increased by the size of the insulating layer of polyurethane foam given in Table 1 below. Individual components of the system are joined together by means of a nipple 4 provided with a permanently fitted gasket 3 of EPDM rubber. The joint area - the space between the components, created due to the "zig", i.e. the type of nipple formation/shape/structure found on the nipple 4 - is additionally filled with polyurethane foam 9. A band clamp 6 was fitted on the outside in the joint area. Thickness of the insulating partition 1 of polyurethane foam in the example was made in the range of: 10 mm to 50 mm. Individual components of the ventilation line from Example 2, together with the thickness of the outer insulation of polyurethane foam, are shown in Fig. 14.A-P and in Table 1. Dimensions shown in Fig. 14 and in Fig. 14.A-P are the dimensions of the inner jackets 2, where d, d1, d2 denote their diameters and L denotes the length of the component, given in millimetres.

**Table 1**

| Fig. 14 - designations from figure names | Inner jacket 2 - d, d1, d2 denotes the diameter of the inner jacket, given in the table and in Fig. 14 in millimetres; L denotes the length of the component in mm | Outer jacket (5) - D, D1, D2 denotes the diameter of the outer jacket, given in the table in millimetres; L denotes the length of the component in mm | Thickness of the insulating layer (1) of polyurethane foam in millimetres |
|---|---|---|---|
| A | Straight duct, known as a spiro pipe d₁ = 315, L = 3000 | Straight duct D₁ = 400, L = 3000 | 42 mm |
| B | Elbow d₁ = 315 | Elbow D₁ = 400 | 42 mm |
| C | T-piece 2x d₁ = 315 / d₂ = 250, L = 500 | T-piece 2x D₁ = 400 / D₂ = 315, L = 500 | 42 to 32 mm |
| D | Straight duct d₁ = 250, L = 1500 - 2 pcs | Straight duct D₁ = 315, L = 1500 - 2 pcs | 32 mm |
| E | Reducer d₁ = 315 / d₂ = 250, L = 200 | Reducer D₁ = 400 / D₂ = 315, L = 200 | 42 to 32 mm |
| F | T-piece 2x d₁ = 250 / d₂ = 200, L = 480 | T-piece 2x D₁ = 315 / D₂ = 250, L = 480 | 32 to 25 mm |
| G | Reducer d₁ = 200 / d₂ = 180, L = 200 | Reducer D₁ = 250 / D₂ = 200, L = 200 | 25 to 10 mm |
| H | Straight duct d₁ = 180, L = 1500 - 2 pcs | Straight duct D₁ = 200, L = 1500 - 2 pcs | 10 mm |
| I | Straight duct d₁ = 250, L = 320 | Straight duct D₁ = 315, L = 320 | 32 mm |
| J | Elbow d₁ = 250 | Elbow D₁ = 315 | 32 mm |
| K | Reducer d₁ = 250 / d₂ = 400, L = 200 | Reducer D₁ = 315 D₂ = 500, L = 200 | 32 to 50 mm |
| L | Straight duct d₁ = 400, L = 1500 - 2 pcs | Straight duct D₁ = 500, L = 1500 - 2 pcs | 50 mm |
| M | Cover d₁ = 315 | | |
| N | Cover d₁ = 250 | | |
| O | Cover d₁ = 400 | | |
| P | Reducer d₁ = 180 / d₂ = 100, L = 200 | Reducer D₁ = 200 / D₂ = 120, L = 200 | 10 mm - connection |

### Example 3

Example 3 does not form part of the claimed invention.

Ventilation ducts are constructed as described in Example 2, except that individual components have larger dimensions and a thicker insulating layer of foam shown in Table 2 and Fig. 15.

The example is a ventilation line of pre-insulated ducts and fittings having a circular cross-section made of galvanised steel strip DX51D Z275, 137 mm wide and 0.45 mm thick for straight spiral-wound ducts and of galvanised steel strip DX51D Z275, 0.5 mm thick for fittings made by means of lap seams and welds. For ducts having a diameter of more than 300 mm, the strip is embossed in order to improve rigidity. The pre-insulated straight duct consists of an inner jacket 2, an insulating partition 1 - an insulating layer of closed-cell polyurethane foam and an outer jacket 5 with a correspondingly larger diameter - D given in Table 2 below. The pre-insulated fitting consists of an inner jacket 2, an insulating partition 1 - a closed-cell insulating layer of polyurethane foam and an outer jacket 5 with a correspondingly larger diameter i.e. increased by the size of the insulating layer 1 of polyurethane foam given in Table 2 below. Individual components of the system are joined together by means of a nipple 4 provided with a permanently fitted gasket 3 of EPDM rubber. The joint area - the space between the components, created due to the "zig" found on the nipple 4 - is additionally filled with polyurethane foam 9. A band clamp 6 was fitted on the outside in the joint area. Thickness of the insulating partition 1 of polyurethane foam in Example 3 i in the range of: 75 to 100 mm. Individual components of the ventilation line from Example 3, together with the thickness of the outer insulation of polyurethane foam, are shown in Fig. 15.A-P below and in Table 2. Dimensions shown in Fig. 15 and in Fig. 15.A-P are the dimensions of the inner jackets 2, where d, d1, d2 denote their diameters and L denotes the length of the component, given in millimetres. Fig. 15. A longitudinal view of Example 3 of the ventilation network with designations of individual components - straight ducts and fittings as specified in Table 2. Table 2 doest not form part of the claimed invention.

**Table 2**

| Fig. 15 Designation s from figure names | Inner jacket (2) - d, d2, d3 denotes the diameter of the inner jacket, given in the table and in Fig. 15 in millimetres; L denotes the length of the component in mm | Outer jacket (5) - D, D1, D2 denotes the diameter of the outer jacket, given in the table in millimetres; L denotes the length of the component in mm | Thickness of the insulating layer (1) of polyurethane foam in millimetres |
|---|---|---|---|
| A | Straight duct d₁ = 1050, L = 3000 | Straight duct D₁ = 1250, L = 3000 | 100 mm |
| B | Elbow d₁ = 1050 | Elbow D₁ = 1250 | 100 mm |
| C | T-piece 2x d₁ = 1050 / d₂ = 800, L = 1070 | T-piece 2x D₁ = 1250 / D₂ = 1000, L = 1070 | 100 mm |
| D | Straight duct d₁ = 800, L = 1500 - 2 pcs | Straight duct D₁ = 1000, L = 1500 - 2 pcs | 100 mm |
| E | Reducer d₁ = 1050 / d₂ = 500, L = 200 | Reducer D₁ = 1250 / D₂ = 600, L = 200 | 100 mm |
| F | T-piece 2x d₁ = 500 d₂ = 400, L = 770 | T-piece 2x D₁ = 700 / D₂ = 600, L = 770 | 100 mm |
| G | Reducer d₁ = 400 / d₂ = 360, L = 200 | Reducer D₁ = 600 / D₂ = 560, L = 200 | 100 mm |
| H | Straight duct d₁ = 360, L = 1500 - 2 pcs | Straight duct D₁ = 560, L = 1500 - 2 pcs | 100 mm |
| I | Straight duct d₁ = 500, L = 320 | Pipe D₁ = 700, L = 320 | 100 mm |
| J | Elbow d₁ = 500 | Elbow D₁ = 700 | 100 mm |
| K | Reducer d₁ = 500 / d₂ = 750, L = 200 | Reducer D₁ = 700 / D₂ = 950, L = 200 | 100 mm |
| L | Straight duct d₁ = 500, L = 1500 - 2 pcs | Straight duct D₁ = 700, L = 1500 - 2 pcs | 100 mm |
| M | Cover d₁ = 1050 | | |
| N | Cover d₁ = 800 | | |
| O | Cover d₁ = 500 | | |
| P | Reducer d₁ = 360 / d₂ = 100, L = 200 | Reducer D₁ = 560 / D₂ = 250, L = 200 | 75 to 100 mm - connection |

### Example 4

### Performance testing for ventilation ducts

The ducts described in Example 2 were subjected to performance testing.

### Description of leakage and strength testing

### □ Characteristics tested

Leakage and strength of ventilation ducts

### □ Testing method

Leakage and strength of the ventilation ducts were tested according to standard PN-EN 12237:2005 Ventilation for buildings - Ventilation ducts of sheet metal of circular cross-section - Requirements for strength and leakage, with regard to maximum limit values of static pressure for execution class S, as specified in test procedures PB LZF -007/1/12-2018 and PB LZF -008/1/12-2018
The tested system of ducts and fittings was subjected to static pressure: -750 (by "sucking" air out of the system) and +2000 Pa (by forcing air into the system)
Pressure holding time 600 s

### □ Results:

Surface area of the tested duct network A = 14.2 m²
Total duct length L = 15.54 m
The test results were referenced to standard conditions: +20 °C and 1013.25 hPa.
The test shows that there is no permanent deformation of the tested system components and no sudden changes in test pressure or air leakage.

### Description of non-fire propagation testing

### Testing method according to PN-EN 13823+A1:2014; PN-EN ISO 11925-2:2020-09

A sample consisting of 7 pieces of foam pre-insulated straight ducts having a circular cross-section (pipes), not connected to each other, positioned vertically, was subjected to the action of a surface-edge flame for about 15 minutes in a special furnace.

The classification report obtained is valid for end-use applications according to the technical conditions to which the buildings and their location should conform, and as for the product that is "non-flammable, non-dripping and non-falling off under the influence of fire and not spreading fire inside buildings" according to the Regulation of the Minister of Infrastructure of 12 April 2002 (Journal of Laws No. 75 of June 15, 2002, item 690, as amended). At the same time, the product is evaluated as not falling off under the influence of fire.

### Description of Test 3 - Material strength of the insulating layer

Scope of testing according to EN 1607:2013 Thermal insulating products for building applications - Determination of tensile strength perpendicular to faces PN-EN 1604:2013 Thermal insulating products for building applications. Determination of dimensional stability under specified temperature and humidity conditions PN-EN 1602:2013 Thermal insulating products for building applications. Determination of the apparent density

The scope of testing of pre-insulated ventilation ducts having a circular cross-section included:
- determination of the apparent density,
- shear strength in a single-sample system,
- dimensional stability after 24 hours at +100°C.

The results are shown in the table below.

Table 3 shows that the samples tested meet the requirements of the standard.

**Table 3**

| Pos. | General | Practical properties | Methods of | Explanations |
|---|---|---|---|---|
| *1* | *2* | *3* | *4* | |
| 1 | Duct leakage - tightness | Class D | PN-EN 12237:2005 WO-KOT/36/01 issue 2 testing conditions: -750 to 2000 P | The tested system is described in Example 2 |
| 2 | Duct strength | no permanent deformation and no sudden change in leakage I in tightness | | The tested system is described in Example 2 |
| 3 | Durability (components - elements made of galvanised steel sheet): | ≥ 275 20 (tolerance according to PN-EN 10346) | PN-EN 10346:2015, PN-EN ISO 2808:2020 PN-EN 1602:2013 | The testing was carried out on samples that are fragments of galvanised steel sheet from which jackets with dimensions of 100x100mm are formed. |
| | - mass c- weight of the zinc coating, g/m² | | | |
| | - thickness of zinc coating, µm | | | |
| 4 | Apparent density (PUR foam core), kg/m³ | ≥ 50 | | Testing on samples of 100m and 50mm thick insulating layer made of foam. From the samples provided, test specimens of approximately 80x80x80mm and 80x80x30mm, respectively, were cut out. |
| 5 | Dimensional stability (PUR foam core), after 24 h at +100°C, %, in directions of: | | PN-EN 1604:2013 | The testing was carried out on samples that are fragments of galvanised steel sheet from which jackets with dimensions of 100x100mm are formed. |
| | - length and width | ±2 | | |
| | - thickness - internal | ± 10 | | |
| 6 | Tensile strength perpendicular to faces (layered samples with a PUR foam core - insulation), kPa | ≥ 35 | PN-EN 1607:2013 | Testing on samples of 100m and 50mm thick insulating layer made of closed-cell polyurethane foam From the samples provided, test specimens of approximately 80x80x80mm and 80x80x30mm, respectively, were cut out. |
| 7 | Thermal conductivity coefficient at 10 °C (PUR (polyurethane) foam core), λ_{D}, W/m·K | 0.020 ÷ 0.025 | PN-EN 12667:2002 | |
| 8 | Fire classification in terms of reaction to fire - reaction to fire, class | B-s3,d0 | PN-EN 13501-1:2019 | |

## Claims

1. Ventilation system of ventilation ducts having a round cross section in the form of straight duct and/ or connector duct, especially elbow or tee or cross-piece or reducer that created together a ventilation system, the duct comprises insulation layer of polyurethane foam, **characterized in that** the duct in its basic structure comprises two separate layers which are located parallel to each other in the form of outer casing and inner casings having a round cross-section made of galvanised steel sheet with a zinc, wherein between the outer casing (5) and the inner casings (2) space is created that is filled with open cells polyurethane foam or close cells polyurethane foam forming insulating compartment (1) of a polyurethane foam with a thickness from 10 to 50 mm, while the diameter D of the outer casing (5) is from 100 to 500 mm and the diameter d of the inner casing (2) is from 100 to 480 mm , and the thickness of each casing of the straight duct ranges from 0.45 mm to 0.5 mm while in the case of connector duct the thickness of each casing of the straight duct ranges from 0.45 mm to 1.2 mm, and additionally the casings (2) of the two element of ventilation system are fastened to each other by a joining clamp (4) having a round section empty inside, in the form of a nipple (4), in which a widening in the form of a ring on the outer surface of the joining clamp (4), whereby the size of joining clamp (4) without forming the ring is adjusted to enable the joining clamp (4) to be inserted into the inner casing of the joining elements until the location of the ring, and additionally a space created between joining inner casing of elements forming ventilation system at the height of the ring of joining clamp (4) are being filled with polyurethane foam forming outer separation layer (9).

2. The system according to the claim 1, whereby the nipple comprises a seal.

3. The system according to the claim 1-2, whereby the thickness of each casing of straight duct is increasing depending of the diameter d of the duct.

4. The system according to the claim 1-3, whereby the thickness of each casing of the connector duct is 0.5 mm.

5. The system according to the claim 1-4, whereby the thickness of each casing of straight duct ranges is 0.5 mm.

6. The system according to the claim 1-5, whereby the thickness of each casing of straight duct increases depending on the diameter of each of inner casing in such a way that when the diameter of any the casing of duct is <=315, the thickness of the any casing is 0.45 mm, while accordingly when above 315 mm it is >= 0.5 mm.

7. The system according to the claim 1-6, whereby outer and inner casing are made of galvanised steel sheet painted or not-painted.

8. The system according to the claim 1-7, whereby the steel sheet thickness is at most 1.2 mm.

9. The system according to the claim 1-8, whereby the length L of a straight duct is L <=3000 mm, while the length L of a connector for a type as tee is 220 ÷ 1250 mm or for symmetric reducer is L = 220 ÷ 500 mm or for asymmetric reducer is L≤ 220 mm or for cross-piece having a round section is L =220 ÷ 1250 mm while for others types of connector is L≤ 1250 mm.

10. The system according to the claim 1-9, whereby the location of joining of ventilation network elements at the point outer casings (5) joining straight elements and/or connectors on outer surface of outer casings of two joining elements is harden by a tighten clamp (6).

## Patentansprüche

1. System mit Lüftungskanälen runden Querschnitts in Form eines geraden Kanals oder eines Verbindungskanals, insbesondere eines Bogens, T-Stücks, Kreuzstücks oder Reduzierstücks, das ein Lüftungssystem bildet, der Kanal umfasst eine Isolierschicht aus Polyurethanschaum, die sich dadurch auszeichnet, dass sie in ihrer Grundstruktur aus zwei separaten, parallel zueinander angeordneten Schichten in Form eines äußeren und eines inneren Gehäuses mit rundem Querschnitt aus Stahlblech, vorzugsweise verzinktem Stahlblech, besteht und zwischen dem äußeren Gehäuse (5) und dem inneren Gehäuse (2) befindet sich ein mit offenzelligem oder geschlossenzelligem Polyurethanschaum gefüllter Raum, der ein Isolierfach (1) mit einer Dicke von 10 bis 50 mm bildet, der Durchmesser D des äußeren Gehäuses (5) beträgt 100 bis 500 mm und der Durchmesser d des inneren Gehäuses (2) 100 bis 480 mm, die Dicke jedes Gehäuses des geraden Kanals liegt zwischen 0,45 mm und 0,5 mm, während sie beim Verbindungskanal jeweils größer ist und die Wandstärke variiert zwischen 0,45 mm und 1,5 mm und zusätzlich werden die Gehäuse (2) der beiden Elemente des Belüftungssystems durch eine Verbindungsklemme (4) miteinander verbunden, die einen runden, innen hohlen Abschnitt in Form eines Nippels (4) aufweist, in dem sich an der Außenfläche der Verbindungsklemme (4) eine ringförmige Erweiterung befindet und die Größe der Verbindungsklemme (4) ohne Ringbildung ist so eingestellt, dass die Verbindungsklemme (4) in das Innengehäuse der verbundenen Elemente bis zur Position des Rings eingeführt werden kann, der zwischen den verbundenen Innengehäusen der Elemente des Belüftungssystems auf Höhe des Rings der Verbindungsklemme (4) entstehende Raum wird mit Polyurethanschaum gefüllt, der eine äußere Trennschicht (9) bildet.

2. Das System nach Anspruch 1, wobei das Nippelstück eine Dichtung aufweist.

3. Das System nach Anspruch 1-2, wobei die Wandstärke jedes Mantelrohrs des geraden Kanals mit dem Durchmesser d des Kanals zunimmt.

4. Das System nach Anspruch 1-3, wobei die Wandstärke jedes Mantelrohrs des Verbindungskanals 0,5 mm beträgt.

5. Das System nach Anspruch 1-4, wobei die Wandstärke jedes Mantelrohrs des geraden Kanals 0,5 mm beträgt.

6. Der Kanal nach Anspruch 1-5, wobei die Wandstärke jedes Mantelrohrs des geraden Kanals mit dem Durchmesser jedes Innenmantelrohrs so zunimmt, dass die Wandstärke jedes Mantelrohrs 0,45 mm beträgt, wenn der Durchmesser eines beliebigen Mantelrohrs ≤ 315 mm ist, und entsprechend ≥ 0,5 mm beträgt, wenn der Durchmesser eines beliebigen Mantelrohrs > 315 mm ist.

7. Das Systemrohr nach Anspruch 1-6, wobei das äußere und innere Gehäuse aus verzinktem, lackiertem oder unlackiertem Stahlblech bestehen.

8. Das System nach Anspruch 1-7, wobei die Blechdicke höchstens 1,2 mm beträgt.

9. Das System nach Anspruch 1-8, wobei die Länge L eines geraden Rohrs L ≤ 3000 mm beträgt, während die Länge L eines Verbindungsstücks für ein T-Stück 220 bis 1250 mm oder für ein symmetrisches Reduzierstück L = 220 bis 500 mm oder für ein asymmetrisches Reduzierstück L ≤ 220 mm oder für ein Kreuzstück mit rundem Querschnitt L = 220 bis 1250 mm beträgt, während sie für andere Verbindungsstücke L ≤ 1250 mm beträgt.

10. Das System nach Anspruch 1-13, wobei die Verbindungsstelle der Lüftungsnetzelemente an der Verbindungsstelle der äußeren Gehäuse (5) gerader Elemente und/oder Verbinder auf der Außenfläche der äußeren Gehäuse zweier Verbindungselemente durch eine Klemme (6) gesichert wird.

## Revendications

1. Système de ventilation de conduits de ventilation à section circulaire, sous forme de conduit droit ou de conduit de raccordement, notamment coude, té, traverse ou réducteur, formant un système de ventilationet le conduit comprend une couche isolante en mousse de polyuréthane **caractérisée en ce que** sa structure de base comprend deux couches distinctes et parallèles, sous forme d'enveloppe extérieure et d'enveloppe intérieure à section circulaire, en tôle d'acier, de préférence zinguée et entre l'enveloppe extérieure (5) et l'enveloppe intérieure (2), un espace est créé et rempli de mousse de polyuréthane à cellules ouvertes ou fermées, formant un compartiment isolant (1) d'une épaisseur de 10 à 50 mm, le diamètre D de l'enveloppe extérieure (5) est compris entre 100 et 500 mm et le diamètre d de l'enveloppe intérieure (2) entre 100 et 480 mm. L'épaisseur de chaque enveloppe d'un conduit droit est comprise entre 0,45 mm et 0,5 mm, tandis que dans le cas d'un conduit de raccordement, l'épaisseur de chaque le diamètre du conduit droit varie de 0,45 mm à 1,5 mm et les gaines (2) des deux éléments du système de ventilation sont fixées l'une à l'autre par une bride de jonction (4), comportant une section ronde vide à l'intérieur sous forme de mamelon (4) dans laquelle un élargissement sous forme d'anneau sur la surface extérieure de la bride de jonction (4), de sorte que la taille de la bride de jonction (4) sans l'anneau est ajustée pour permettre à la bride de jonction (4) d'être insérée dans la gaine intérieure des éléments de jonction jusqu'à l'emplacement de l'anneau et, de plus, un espace créé entre les gaines intérieures des éléments formant le système de ventilation à la hauteur de l'anneau de la bride de jonction (4) est rempli de mousse de polyuréthane formant une couche de séparation extérieure (9).

2. Système selon la revendication 1, dans lequel le raccord comporte un joint d'étanchéité.

3. Système selon la revendication 1-2, dans lequel l'épaisseur de chaque paroi du conduit droit augmente en fonction du diamètre d du conduit.

4. Système selon la revendication 1-3, dans lequel l'épaisseur de chaque paroi du conduit de raccordement est de 0,5 mm.

5. Système selon la revendication 1-4, dans lequel l'épaisseur de chaque paroi du conduit droit est de 0,5 mm.

6. Conduit selon la revendication 1-5, dans lequel l'épaisseur de chaque paroi du conduit droit augmente en fonction du diamètre de chaque paroi intérieure, de sorte que lorsque le diamètre de la paroi du conduit est inférieur ou égal à 315 mm, l'épaisseur de la paroi est de 0,45 mm, et qu'elle est supérieure ou égale à 0,5 mm pour un diamètre supérieur à 315 mm.

7. Le conduit selon la revendication 1-6, dans lequel les enveloppes intérieure et extérieure sont en tôle d'acier galvanisé, peinte ou non.

8. Le système selon la revendication 1-7, dans lequel l'épaisseur de la tôle d'acier est au maximum de 1,2 mm.

9. Le système selon la revendication 1-8, dans lequel la longueur L d'un conduit droit est inférieure ou égale à 3 000 mm, tandis que la longueur L d'un raccord en T est comprise entre 220 et 1 250 mm, celle d'un réducteur symétrique entre 220 et 500 mm, celle d'un réducteur asymétrique est inférieure ou égale à 220 mm, celle d'une traverse à section ronde est comprise entre 220 et 1 250 mm, et celle des autres types de raccords est inférieure ou égale à 1250 mm.

10. Le système selon la revendication 1-13, dans lequel l'emplacement de jonction des éléments du réseau de ventilation au point de jonction des boîtiers extérieurs (5) reliant des éléments droits et/ou des connecteurs sur la surface extérieure des boîtiers extérieurs de deux éléments de jonction est durci par un collier de serrage (6).
